# DEMANDE DE BREVET EUROPEEN

(11) **EP 1 413 832 A2**
(43) Date de publication de la demande: **28.04.2004**
(21) Numéro de dépôt: 03364026.9
(22) Date de dépôt: 23.10.2003
(51) Int. Cl.: F24C 15/10, F24C 15/16

(54) **Dispositif pour la cuisson de mets à base de pâte, notamment levée, formant insert pour un four à usage domestique**

(30) Priorité: 23.10.2002 FR 0213195
(71) Demandeur: Leveque, Maurice, 56500 Locmine (FR)
(72) Inventeur: Leveque, Maurice, 56500 Locmine (FR)
(74) Mandataire: Branger, Jean-Yves

(57) **Abrégé**

La présente invention est relative à un dispositif pour la cuisson de mets à base de pâte, notamment levée, formant insert pour un four à usage domestique.

Ce dispositif est remarquable par le fait qu'il comporte une sole (2) en matériau réfractaire, qui surplombe et est disposée à distance d'une plaque (4) en matériau absorbant la chaleur, l'espace qui les sépare constituant une chambre (5) dite "chambre à buée", et en ce que ladite sole (2) comporte au moins une ouverture traversante (22) qui fait communiquer sa face supérieure (20) avec ladite chambre (5), qui sert au déversement d'eau sur la plaque et assure l'échappement de la vapeur ainsi formée, cette ouverture agissant alors comme une cheminée de distribution.

## Description

La présente invention concerne un dispositif pour la cuisson de mets à base de pâte, notamment levée, formant insert pour un four à usage domestique.

De nombreux mets disponibles dans le commerce sont destinés à être réchauffés ou cuits dans un four domestique, avant d'être consommés. Certains sont vendus frais alors que d'autres sont commercialisés sous forme congelée.

Ainsi, certaines pizzas sont vendues fraîches ou précuites et doivent séjourner au four avant consommation.

Par ailleurs, de nombreux consommateurs confectionnent eux-mêmes leurs pizzas et les cuisent dans leur four domestique.

Or, l'obtention d'une pâte moelleuse, non desséchée, est délicate. Une manière empirique de solutionner ce problème est d'introduire dans le four, à proximité de la pâte, un récipient contenant de l'eau, laquelle s'évapore progressivement sous l'effet de la chaleur. La vapeur ainsi créée contribue à humidifier la pâte.

Lorsque l'on se propose de confectionner soi-même du pain, ou plus généralement un produit à base de pâte levée, se pose le même problème de déficit d'humidité.

Certains fours professionnels, notamment de boulangers, sont quant à eux équipés de moyens distributeurs de vapeur.

De manière connue en soi, la présence de vapeur dans l'atmosphère du four contribue à donner aux produits cuits, notamment aux pains, un meilleur aspect qui se traduit par un aspect brillant nettement accentué. La présence de vapeur tout autour des pâtons favorise par ailleurs le développement de la pâte. Elle évite que la pâte se craquelle. La croûte des produits est plus fine.

On décrit dans le document US-A-5,776,532 un appareil pour cuire du pain. Il comporte un récipient dont la face inférieure présente au moins une perforation destinée à être recouverte par le pâton à cuire.

Ce récipient est mis en place sur un bac qui reçoit une certaine quantité d'eau.

Quand l'ensemble est mis en place dans un four, l'eau contenue dans le bac chauffe, s'évapore et traverse la ou les perforations pour venir en contact avec la face inférieure du pâton. Cette alimentation en vapeur contribue à rendre moins épaisse la croûte du pain dans sa partie inférieure, et seulement dans cette partie.

Le reste de la surface du pain n'est pas affectée par l'évaporation de l'eau.

Le document US-A-5,938,959 concerne un appareil du même genre, avec des éléments supérieur et inférieur en forme de récipients.

Le document US-A-3,866,526 décrit un appareil allant au four, qui fait office de barbecue.

Il comprend un récipient recevant de l'eau, équipé d'un couvercle. Sa face supérieure est concave. Il est pourvu d'une large ouverture à laquelle est connecté un tuyau d'évacuation. Le centre du couvercle est par ailleurs percé d'une petite ouverture.

Le couvercle est destiné à recevoir le produit à cuire tel qu'un poulet.

Au cours de la cuisson, la vapeur dégagée s'évacue préférentiellement vers l'extérieur par le tuyau, mais une partie de celle-ci se condense contre la face interne du couvercle, en favorisant la collecte des graisses susceptibles de se dégager du produit, qui s'évacuent via l'ouverture.

Le document EP-A-0 517 681 décrit un système de cuisson à la vapeur, dans lequel une réserve d'eau est reliée à un récipient dont l'ouverture supérieure débouche à l'intérieur d'un récipient fermé.

Le document US-A-5,235,903 se rapporte à un appareil du même type général que ceux décrits dans les documents US-A-5,776,532 et 5,938,959 précités, dans lequel l'eau contenue dans le récipient voit sa pression réduite afin que l'eau bout en dessous de 100°C.

Enfin, le document US-A-4,123,969 décrit un appareil de cuisson dans lequel un récipient contenant de l'eau présente une multitude d'orifices d'échappement dans sa paroi supérieure, de manière à ce que de la vapeur se dégage dans une enceinte formant étuve pour la levée de pâtons.

Ces derniers documents sont représentatifs de la technique qui consiste à prévoir une cuisson au four dans un environnement de vapeur. Cependant, tous les appareils décrits dans les documents relevés comportent un récipient formant réserve d'eau. Cette réserve présente une inertie importante avant que de la vapeur se dégage.

La présente invention a donc pour but de proposer un dispositif à usage domestique pour la cuisson de mets à base de pâte, notamment levée, qui forme un insert pour un four de cuisine, et qui soit apte à reproduire au mieux et de manière rationnelle les conditions de cuisson en présence de vapeur, que l'on rencontre dans les laboratoires des professionnels.

Un autre but de l'invention est de proposer un dispositif de structure simple, susceptible d'être utilisé par le grand public, sans nécessiter des compétences particulières.

Il s'agit donc d'un dispositif pour la cuisson de mets à base de pâte, notamment levée, formant insert pour un four à usage domestique.

Conformément à l'invention, ce dispositif se caractérise essentiellement par le fait qu'il comporte une sole en matériau réfractaire, qui surplombe et est disposée à distance d'une plaque en matériau absorbant la chaleur, l'espace qui les sépare constituant une chambre dite "chambre à buée", et en ce que ladite sole comporte au moins une ouverture traversante qui fait communiquer sa face supérieure avec ladite chambre, qui sert au déversement d'eau sur la plaque et assure l'échappement de la vapeur ainsi formée, cette ouverture agissant alors comme une cheminée de distribution.

La présence d'au moins une ouverture dans l'épaisseur de la sole va permettre d'y déverser aisément une quantité appropriée d'eau, laquelle va s'écouler à travers l'ouverture pour retomber sur la plaque. A cet égard, on entend par "plaque" une feuille (même épaisse) plate de matière rigide,, dépourvue de rebords qui lui donnerait alors l'aspect d'un récipient.

A son contact, l'eau va se vaporiser et se répandre dans la chambre à buée pour ressortir progressivement au dessus de la sole, via l'ouverture qui fait alors office de cheminée d'évacuation.

Dans l'ensemble de la présente demande, on entend par les termes :
- insert : un dispositif dépourvu de moyens de chauffage, qui ne peut remplir sa fonction de cuisson que s'il est introduit dans un four ;
- réfractaire : un matériau non métallique (mais n'excluant pas ceux contenant un constituant métallique) dont la résistance pyroscopique est élevée.

Selon d'autres caractéristiques avantageuses et non limitatives de l'invention :
- ladite sole est monobloc ;
- ladite sole constituée de plusieurs éléments distincts en matériau réfractaire ;
- ladite ouverture est située en région périphérique de la sole ;
- lorsque la sole est rectangulaire, ladite ouverture est située dans un angle de ladite sole ou à proximité immédiate de celui-ci ;
- l'écartement qui sépare ladite sole de ladite plaque est de l'ordre de 1 à 2 cm ;
- ladite plaque est métallique ;
- il est au moins partiellement entouré de parois périphériques verticales aptes à réverbérer la chaleur, qui s'étendent depuis la dite plaque jusqu'au dessus de ladite sole ;
- lorsque la sole est rectangulaire, il est pourvu de parois périphériques sur trois de ses côtés ;
- la partie des parois qui s'étend au-delà de la face supérieure de la sole est prévue repliable.

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue en perspective d'un mode de réalisation possible du dispositif de l'invention ;
- les figures 2 et 3 sont des vues de face simplifiées et à échelle réduite du dispositif de la figure 1, destinée à illustrer respectivement la manière selon laquelle de l'eau est déversée dans l'ouverture de la sole, et le cheminement de la vapeur résultant de cette eau.

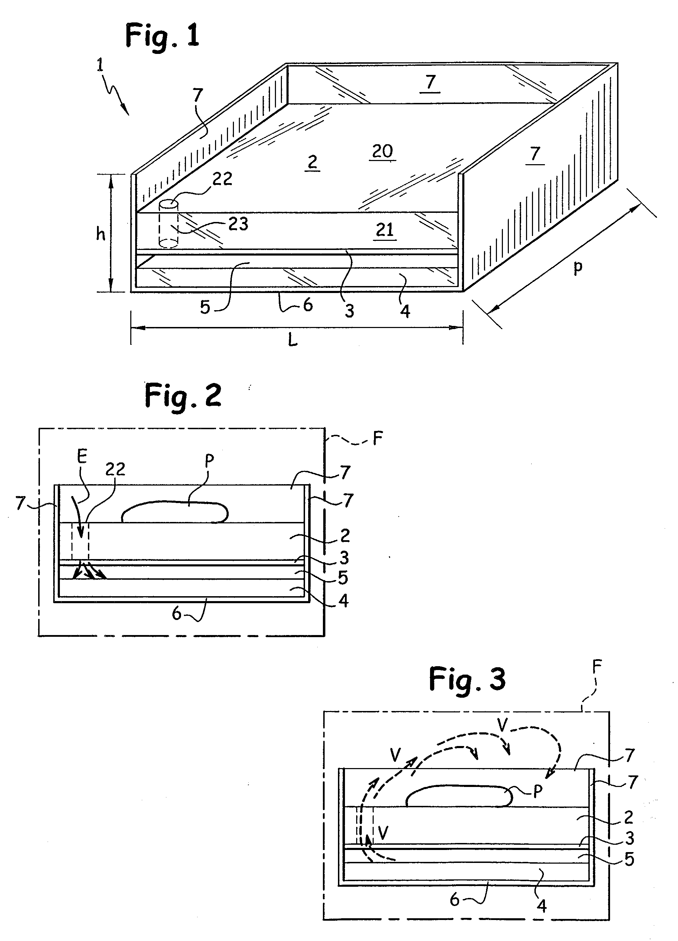

Le dispositif 1 représenté à la figure 1 annexée est particulièrement adapté pour être inséré dans le four domestique qui équipe traditionnellement la cuisine des particuliers.

De ce fait, il s'inscrit dans un parallélépipède rectangle. Sa largeur L est bien entendu inférieure à celle du four, mais de préférence proche de celle-ci. Sa profondeur p est avantageusement tout juste inférieure à la profondeur du four, de telle manière que lorsqu'on referme la porte de ce dernier, elle viennent pratiquement s'appliquer contre la face avant du dispositif. Enfin, sa hauteur h est par exemple égale à la moitié de la hauteur du four.

Ce dispositif comporte essentiellement une sole 2 en matériau réfractaire, qui surplombe et est disposée à distance d'une plaque 4 en matériau absorbant la chaleur.

La sole 2 affecte la forme d'un parallélépipède rectangle. Elle est constituée par exemple d'un matériau tel que la brique. Il est bien entendu qu'une autre matière résistant à des températures élevées convient aussi.

Dans le mode de réalisation représenté ici, la sole est constituée d'une seule et unique pièce. Selon d'autres variantes non représentées, elle pourrait être constituée de la juxtaposition d'éléments distincts de plus petite taille, éventuellement rendus solidaires les uns des autre par un liant adapté.

A titre indicatif, l'épaisseur de cette sole est de l'ordre de 1 à 3 cm.

Comme cela est particulièrement visible sur cette figure 1, la sole comporte une ouverture 22 qui fait communiquer sa face supérieure 20 avec une chambre 5, disposée immédiatement en dessous. On reviendra sur cette caractéristique particulière, plus loin dans la description, pour en expliquer la fonction.

La sole 2 repose sur un support plan 3, par exemple constitué d'une grille métallique, notamment du type de celles qui équipent les fours à usage domestique.

Comme indiqué plus haut, la sole 2 surplombe et est disposée à distance d'une plaque 4 en matériau absorbant la chaleur.

Cette plaque présente, en largeur et en profondeur, des dimensions identiques à celles de la sole.

Cette plaque est par exemple en métal. Elle est représentée ici sous une forme massive. Toutefois, dans mode de réalisation différent, elle pourrait présenter une épaisseur réduite.

Elle repose sur un support 6 qui constitue le fond du dispositif.

Ce support, ainsi que la grille 3, peuvent faire partie d'un seul et même équipement qui les maintient à distance l'une de l'autre.

De préférence, l'écartement qui sépare la sole 2 de la plaque 3 est de l'ordre de 1 à 2 cm.

Dans le mode de réalisation représenté, le dispositif 1 est partiellement entouré de parois périphériques verticales 7. En l'occurrence, ces parois garnissent trois côtés du dispositif. Plus précisément, la face avant du dispositif est dépourvue d'une telle paroi, de sorte que l'on a un accès direct à la tranche 21 de la sole, ainsi qu'à sa face supérieure 20.

Dans le mode de réalisation représenté ici, les parois 7 sont d'une seule pièce avec le support 6. Il peut être prévu sur les faces en regard des deux parois latérales 7, des pattes ou autres éléments non présents, adaptés pour supporter la grille 3 sur laquelle repose la sole 2.

Les parois 7 sont aptes à réverbérer la chaleur, ce qui signifie qu'elles sont constituées ou revêtues d'un matériau qui est en mesure d'assurer cette fonction.

Un matériau particulièrement adapté est un revêtement à base d'aluminium.

Ces parois 7 s'étendent depuis la base de la plaque 4, jusqu'au dessus de la sole 2.

Elles peuvent être prévues solidaires ou indépendantes les unes des autres.

Dans ce dernier cas de figure, la partie des parois qui s'étend au-delà de la face supérieure 20 de la sole 2 peut être prévue repliable, de manière à pouvoir être rabattue soit au dessus de ladite sole, soit dans la direction opposée. Pour ce faire, une ligne de pliage peut être prévue dès la fabrication. Dans cette hypothèse, les parois sont maintenues en position érigée par des moyens qui les rendent alors solidaires les unes des autres.

On expliquera ci-après le fonctionnement du dispositif selon l'invention, plus particulièrement en référence aux figures 2 et 3 et en supposant que l'on souhaite cuire du pain.

Pour ce faire, le dispositif conforme à l'invention est mis en place dans le four, que l'on aura préalablement porté à la température adéquate.

Un pâton P a été déposé préalablement sur la sole.

Une certaine quantité d'eau est alors déversée par le dessus de la sole 2, au travers de l'ouverture 22. Celle-ci est représentée ici comme ayant une section 23 circulaire. Toutefois, toute autre forme de réalisation peut être envisagée.

L'eau est déversée à l'aide d'un récipient adéquat. Un manuel d'utilisation fourni avec le dispositif peut indiquer la quantité d'eau adaptée à chaque produit à cuire. Il peut être par ailleurs prévu avec ce manuel une seringue de distribution d'eau. Celle-ci présente l'intérêt de permettre un dosage précis de la quantité d'eau introduite et d'en faciliter l'introduction dans l'ouverture 22.

La quantité d'eau est par exemple comprise entre 1 et 20 ml et dépend du produit à cuire.

On ferme alors la porte du four. Ce faisant, ladite porte se situe au voisinage immédiat du dispositif 1 et fait alors office de quatrième paroi 7. En quelque sorte, elle contribue à clôturer la "chambre à buée" 5 qui est formée par l'espace qui sépare la sole 2 de la plaque 4.

L'eau ainsi déversée s'écoule au travers de l'ouverture 22 et se répand sur la plaque 4, comme le montrent les flèches E de la figure 2. Cette dernière ayant emmagasiné de la chaleur, l'eau se vaporise et se répand dans la "chambre à buée". Le fait que cette chambre soit cloisonnée par les parois 7 et par la porte du four contribue à confiner la vapeur dans la chambre.

Elle peut malgré tout en ressortir par l'ouverture 22, qui fait alors office de cheminée de distribution. La vapeur est alors régulièrement distribuée au dessus de la sole 2, comme le montrent les flèches en traits interrompus de la figure 3. Cette atmosphère de vapeur au voisinage du pâton **P** contribue à donner au produit cuit les qualités exposées en introduction de la présente demande.

Dans la forme de réalisation présentée ici, l'ouverture 22 est prévue à proximité d'un angle de la sole 2 et du coté de sa face dépourvue de paroi 7. Cela permet d'y déverser de l'eau de manière particulièrement aisée. Toutefois, toute autre disposition peut convenir, sous réserve que l'ouverture soit prévue en région périphérique de la sole c'est-à-dire au plus à quelques centimètres du rebord de la sole. Ainsi, le déversement de l'eau s'en trouve facilité.

En tout état de cause, il est exclu, au sens de la présente invention, que l'ouverture se trouve dans la région centrale de la sole où est déposé le pâton. En effet, dans un tel cas, il serait impossible d'y déverser de l'eau.

Bien entendu, il peut être prévu dans l'épaisseur de la sole plus d'une ouverture.

Le dispositif est de préférence laissé en place dans le four, après la fin de la cuisson du pâton **P**. Par sécurité, il s'avère prudent de l'en extraire seulement lorsque le four est froid.

Le dispositif selon l'invention permet donc d'obtenir chez soi des produits cuits d'excellente qualité et ne nécessite pas de dextérité particulière pour son utilisateur.

## Revendications

1. Dispositif pour la cuisson de mets à base de pâte, notamment levée, formant insert pour un four à usage domestique, **caractérisé par le fait qu'**il comporte une sole (2) en matériau réfractaire, qui surplombe et est disposée à distance d'une plaque (4) en matériau absorbant la chaleur, l'espace qui les sépare constituant une chambre (5) dite "chambre à buée", et en ce que ladite sole (2) comporte au moins une ouverture traversante (22) qui fait communiquer sa face supérieure (20) avec ladite chambre (5), qui sert au déversement d'eau sur la plaque et assure l'échappement de la vapeur ainsi formée, cette ouverture agissant alors comme une cheminée de distribution.

2. Dispositif selon la revendication 1, **caractérisé par le fait que** ladite sole (2) est monobloc.

3. Dispositif selon la revendication 1, **caractérisé par le fait que** ladite sole (2) constituée de plusieurs éléments distincts en matériau réfractaire.

4. Dispositif selon l'une des revendications 1 à 3, **caractérisé par le fait que** ladite ouverture (22) est située en région périphérique de la sole (2).

5. Dispositif selon la revendication 4, dans lequel la sole est rectangulaire, **caractérisé par le fait que** ladite ouverture (22) est située dans un angle de ladite sole (2) ou à proximité immédiate de celui-ci.

6. Dispositif selon l'une des revendications 1 à 5, **caractérisé par le fait que** l'écartement qui sépare ladite sole (2) de ladite plaque (4) est de l'ordre de 1 à 2 cm.

7. Dispositif selon l'une des revendications 1 à 6, **caractérisé par le fait que** ladite plaque (4) est métallique.

8. Dispositif selon l'une des revendications 1 à 7, **caractérisé par le fait qu'**il est au moins partiellement entouré de parois périphériques verticales (7') aptes à réverbérer la chaleur, qui s'étendent depuis la dite plaque (5) jusqu'au dessus de ladite sole (2).

9. Dispositif selon la revendication 4, dans lequel la sole est rectangulaire, **caractérisé par le fait qu'**il est pourvu de parois périphériques (7) sur trois de ses côtés.

10. Dispositif selon l'une des revendications 8 ou 9, **caractérisé par le fait que** la partie des parois (7) qui s'étend au-delà de la face supérieure (20) de la sole (2) est prévue repliable.
